# EUROPEAN PATENT SPECIFICATION

(11) **EP 4 052 942 B1**
(45) Date of publication and mention of the grant of the patent: **23.04.2025**
(21) Application number: 22156641.7
(22) Date of filing: 14.02.2022
(51) Int. Cl.: B60K 6/48, B60W 20/50, B60W 10/08, B60W 50/02, B60W 50/023, B60W 50/038, B60W 50/029, B60W 10/02, B60W 10/11, B60K 6/20, B60K 6/442, B60K 6/547

(54) **CONTROL DEVICE FOR HYBRID VEHICLE**
STEUERUNGSVORRICHTUNG FÜR HYBRIDFAHRZEUG
DISPOSITIF DE COMMANDE POUR VÉHICULE HYBRIDE

(30) Priority: 03.03.2021 JP 2021033309
(43) Date of publication of application: 07.09.2022
(73) Proprietor: Suzuki Motor Corporation, Hamamatsu-shi, Shizuoka 432-8611 (JP)
(72) Inventor: TAKAHASHI, Yusuke, Hamamatsu-shi, 432-8611 (JP); KOIZUMI, Shingo, Hamamatsu-shi, 432-8611 (JP)
(74) Representative: Henkel & Partner mbB

(56) References cited:
- DE-A1- 102008 014 495
- JP-A- 2002 321 542
- JP-A- 2017 001 546
- US-A1- 2015 111 693

## Description

### [Technical Field]

The present invention relates to a control device for a hybrid vehicle.

### [Background Art]

There is a known hybrid vehicle that includes an internal combustion engine and an electric motor as drive sources and also includes a manual transmission and a friction clutch as means for transmitting power from the drive sources to driving wheels (see JP2013-1182A).

In this hybrid vehicle, the motor is installed at the output side (driving wheel side) of the manual transmission, and the rotational direction of the motor is switched according to the advancing direction of the vehicle. Further, the operation position of a shift lever to be operated by the driver is detected by a shift position sensor, and a driving torque (MG torque) of the motor is adjusted based on the result from the shift position sensor.

To prevent the occurrence of problems in controlling the motor when the shift position sensor is in an abnormal state, this hybrid vehicle notifies the driver of an abnormal state of the shift position sensor and performs an EV travel prohibition process.

Patent Literature 2 discloses a vehicular drive controller provided with a controller which controls drive of a motor by means of data communication from a travelling condition detection means including a shift position sensor for detecting the shift position of the front side transmission interposed between the engine and the front wheels FRW. A rear side clutch is provided between the motor and the rear wheels RRW. A shift signal monitoring means for detecting the driver's shift operating conditions is provided in addition to the shift position sensor. The controller executes fail control to release the rear side clutch when there is a disagreement between the AT shift signal obtained by the data communication and the shift position detected by the shift signal monitoring means.

### [Citation List]

### [Patent Literature]

[Patent Literature 1] JP2013-1182A
[Patent Literature 2] JP2002-321542A

### [Summary of Invention]

### [Technical Problem]

However, regarding the hybrid vehicle described in JP2013-1182A, there is no specific description of the configuration for detecting the presence/absence of the abnormal state of the shift position sensor and hence, how the abnormal state of the shift position sensor is detected is unknown from JP2013-1182A.

If the abnormal state of the shift position sensor is detected by using a device dedicated for detecting failure, there is a possibility of an increase in manufacturing cost of a control device.

The present invention has been made in view of the above-mentioned circumstances, and it is an object of the present invention to provide a control device for a hybrid vehicle, capable of easily detecting the abnormal state of the shift position sensor at a low cost by making use of a neutral switch and a reverse switch and preventing an electric motor from being driven with the detection result from the shift position sensor that is in an abnormal state.

### [Solution to Problem]

According to the present invention, there is provided a control device for a hybrid vehicle as set out in independent claim 1. Advantageous developments are defined in the dependent claims.

### [Advantageous Effect of Invention]

As described above, according to the present invention, it is possible to easily detect the abnormal state of the shift position sensor at a low cost by making use of the neutral switch and the reverse switch and to prevent the electric motor from being driven with the detection result from the shift position sensor that is in an abnormal state.

### [Brief Description of Drawings]

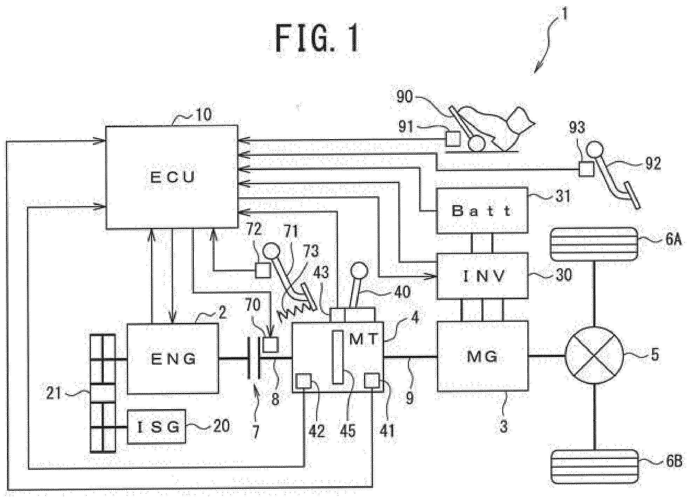

Figure 1 is a schematic configuration diagram of a hybrid vehicle according to an embodiment of the present invention.

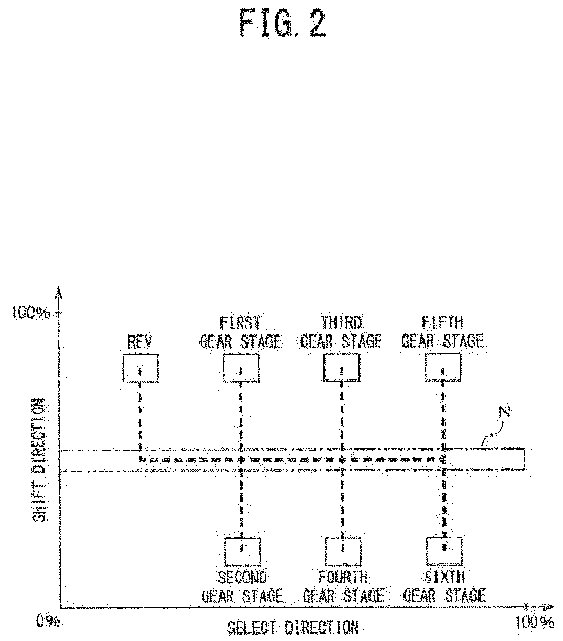

Figure 2 is a view showing an output of a signal from a shift position sensor of the hybrid vehicle, and shows a range of the output by which each gear stage is determined.

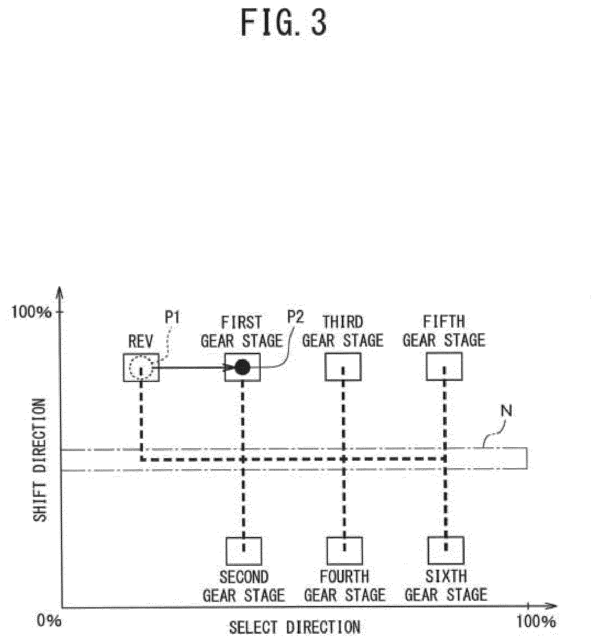

Figure 3 is a view showing an output of a signal from the shift position sensor of the hybrid vehicle, and shows an example of the relationship, at the time of the abnormal state occurring, between an actual gear stage and a gear stage erroneously determined due to the output from the shift position sensor.

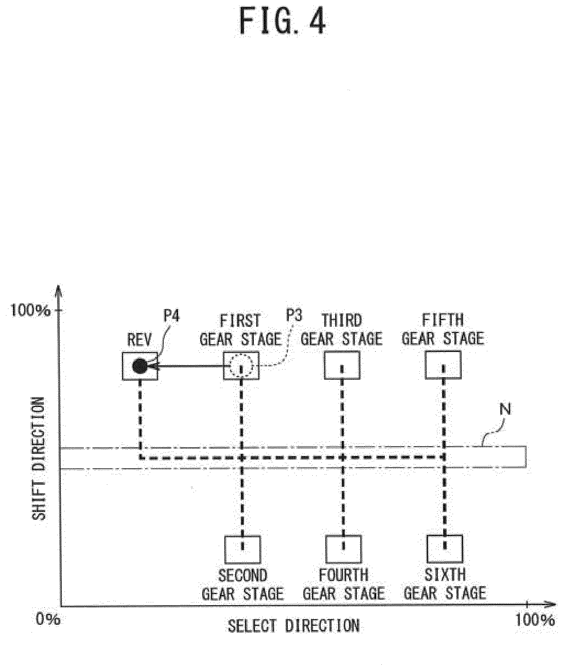

Figure 4 is a view showing an output of a signal from the shift position sensor of the hybrid vehicle, and shows another example of the relationship, at the time of the abnormal state occurring, between an actual gear stage and a gear stage erroneously determined due to the output from the shift position sensor.

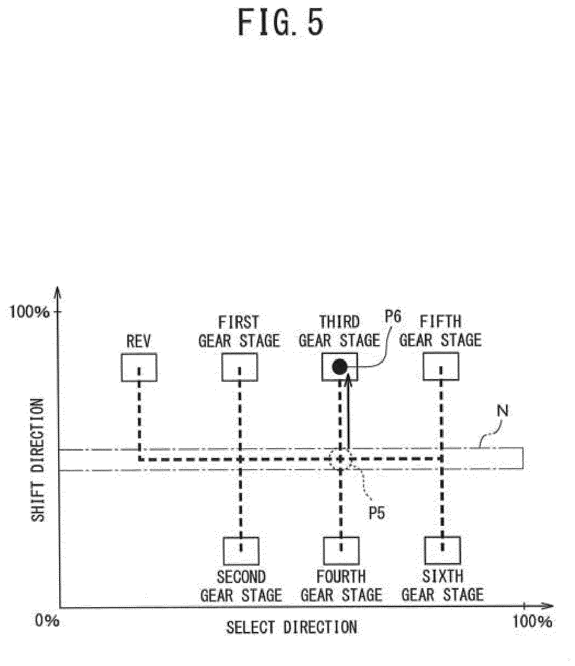

Figure 5 is a view showing an output of a signal from the shift position sensor of the hybrid vehicle, and shows still another example of the relationship, at the time of the abnormal state occurring, between an actual gear stage and a gear stage erroneously determined due to the output from the shift position sensor.

### [Description of Embodiment]

A control device according to an embodiment of the present invention is mounted on a hybrid vehicle including: an internal combustion engine and an electric motor each configured to generate a driving force to be transmitted to a driving wheel; a manual transmission connected to the internal combustion engine via a clutch, and including a transmission member by which one of gear stages is established in response to an operation of a shift lever; a shift position sensor configured to detect a position of the transmission member corresponding to the established gear stage of the manual transmission; a neutral switch configured to detect that the established gear stage is neutral; and a reverse switch configured to detect that the established gear stage is a reverse gear stage, a rotational direction of the electric motor being switched according to an advancing direction of the hybrid vehicle, the control device including a control unit configured to perform, for the electric motor, a driving control based on the detection result by the shift position sensor, wherein the control unit prohibits said driving control on a first condition that the detection result by the shift position sensor fails to match the detection results by the neutral switch and the reverse switch.

With such a configuration, the control device for a hybrid vehicle according to one embodiment of the present invention can easily detect the abnormal state of the shift position sensor at a low cost by making use of the neutral switch and the reverse switch, and can prevent the electric motor from being driven with the detection result from the shift position sensor that is in an abnormal state.

### [Embodiment]

Hereinafter, a control device for a hybrid vehicle according to one embodiment of the present invention will be described with reference to drawings. Figure 1 to Figure 5 are views showing the control device for a hybrid vehicle according to an embodiment of the present invention.

First, a configuration will be described.

In Figure 1, a hybrid vehicle 1 according to an embodiment of the present invention includes an engine 2, a motor generator 3 (referred to as "MG") serving as an electric motor, a manual transmission 4, a differential device 5, left and right driving wheels 6A, 6B, and an electric control unit (ECU) 10 serving as a control unit. The engine 2 in this embodiment constitutes an internal combustion engine.

A plurality of cylinders are formed in the engine 2. In this embodiment, the engine 2 is configured to perform, for each cylinder, a series of four strokes including an intake stroke, a compression stroke, an expansion stroke, and an exhaust stroke.

An integrated starter generator (ISG) 20 is coupled to the engine 2. The ISG 20 is coupled to a crankshaft (not shown) of the engine 2 via a belt 21 and the like.

The ISG 20 has a function as an electric motor that is rotated with the supply of electric power, thus rotationally driving the engine 2, and a function as a generator that is rotated by a rotational force inputted from the crankshaft of the engine 2 to thereby convert such rotation to electric power.

The motor generator 3 has a function as an electric motor that generates a driving force by electric power supplied from a battery 31 via an inverter 30, and a function as a generator that performs regenerative power generation by a rotational force (reverse driving force) inputted from the driving wheels 6A, 6B via the differential device 5.

Under the control of the ECU 10, the inverter 30 converts DC electric power supplied from the battery 31 to three-phase AC electric power to supply the three-phase AC electric power to the motor generator 3, and converts three-phase AC electric power generated by the motor generator 3 to DC electric power to charge the battery 31. The battery 31 is a secondary battery, such as a lithium ion battery, for example.

The manual transmission 4 is a manual transmission (MT) that changes the rotation outputted from the engine 2 at a transmission gear ratio corresponding to one of a plurality of gear stages and outputs the changed rotation.

The manual transmission 4 includes an input shaft 8 and an output shaft 9, power from the engine 2 being transmitted to the input shaft 8, the output shaft 9 being connected with the input shaft 8 via a plurality of gear pairs. The output shaft 9 is connected to the left and right driving wheels 6A, 6B via the differential device 5. An output shaft of the motor generator 3 is connected to the output shaft 9 of the manual transmission 4. In other words, on a transmission path along which a driving force is transmitted, the output shaft of the motor generator 3 is disposed at a position closer to the driving wheels 6A, 6B than the manual transmission 4 is, so that a driving force can be transmitted to the driving wheels 6A, 6B irrespective of a state of the gear stage of the manual transmission 4 (i.e., not via the manual transmission 4).

The gear stages to be established in the manual transmission 4 include forward gear stages for forward traveling from the first gear stage of the low speed stage to the sixth gear stage of the high speed stage, and a reverse gear stage, for example. The number of gear stages for traveling varies depending on various elements of the hybrid vehicle 1, and is not limited to the above-mentioned first to sixth gear stages.

The gear stage of the manual transmission 4 is selected/switched by the driver's operation, and e.g., is switched in response to the operation position of a shift lever 40 operated by the driver.

Specifically, the shift lever 40 is communicated with a shift-and-select shaft 45 via a cable or a link, the shift-and-select shaft 45 being provided in the manual transmission 4. The shift-and-select shaft 45 moves with the shift lever 40 which moves with the operation performed by the driver. More specifically, the shift-and-select shaft 45 moves in a direction of an axis thereof in response to the select operation to the shift lever 40 by the driver, and rotates about the axis in response to the shift operation to the shift lever 40 by the driver.

The shift-and-select shaft 45 is provided with a finger portion (not shown). The manual transmission 4 has a transmission mechanism (not shown) that switches the gear stages, and the finger portion is a member that engages with the transmission mechanism to move the transmission mechanism. Specifically, when the shift-and-select shaft 45 moves in an axial direction, the finger portion selectively fits into a shift yoke for first-second gear stage, a shift yoke for third-fourth gear stage, a shift yoke for fifth-sixth gear stage, or a reverse shift yoke, none of the shift yokes being shown in the drawing. In other words, the transmission mechanism is formed of these shift yokes, a shifter shaft, a shift fork, and a synchronization device to be described later.

For example, the shift-and-select shaft 45 moves in the axial direction by the select operation to cause the finger portion to move to a position where the finger portion fits into the shift yoke for first-second gear stage, thus selecting the shift yoke for first-second gear stage. Thereafter, when the shift-and-select shaft 45 rotates about the axis by the shift operation, the finger portion moves the shift yoke for first-second gear stage, moving in the axial direction a shifter shaft for first-second gear stage (not shown) coupled to the shift yoke for first-second gear stage, thereby moving in the axial direction a shift fork for first-second gear stage (not shown) coupled to the shifter shaft for first-second gear stage. Due to the movement of the shift fork, the synchronization device is actuated to cause gear for the gear stage to engage with the input shaft 8 or the output shaft 9 so that a driving force can be transmitted thereto. The gear stage is established in such a manner.

For example, when the shift fork for first-second gear stage moves to one side of the axial direction (i.e., moves toward one gear of a gear pair for first gear stage in the axial direction) so as to establish the first gear stage, a sleeve for first-second gear stage fitting to the shift fork for first-second gear stage causes the one gear for first gear stage to couple with the output shaft 9 to allow the rotation of the gear and the output shaft 9 as an integral body, and thereby power from the engine 2 is outputted to the differential device 5 via the input shaft 8, the other gear for first gear stage provided on the input shaft 8, the one gear for first gear stage coupled to the output shaft 9 by the sleeve, and the output shaft 9.

The state (position) of the gear stage of the manual transmission 4 that is switched by the driver's operation to the shift lever 40 as described above is to be detected by a shift position sensor 41. The shift position sensor 41 is connected to the ECU 10 to detect the position of the shift-and-select shaft 45 and send the detection result to the ECU 10.

Specifically, the shift position sensor 41 includes a magnetic detection element, such as a hall element. The shift-and-select shaft 45 is provided with a detection portion to be detected, the detection portion being made of a permanent magnet (not shown).

When the shift-and-select shaft 45 moves in a select direction (axial direction) and a shift direction (rotational direction), the shift position sensor 41 detects the intensity of a magnetic field generated with the movement of the detection portion to be detected of the shift-and-select shaft 45, generates a voltage corresponding to the intensity of the magnetic field, and outputs an output signal corresponding to the voltage.

The output signal outputted from the shift position sensor 41 indicates the position of the shift-and-select shaft 45, and is set in advance to vary with the gear stages. The ECU 10 determines a currently established gear stage (current gear stage) based on the output signal from the shift position sensor 41.

Figure 2 relates to an output of a signal from the shift position sensor 41, and shows a range of the output by which the gear stage is determined. As shown by broken lines in Figure 2, the shift position sensor 41 detects the movement (hereinafter referred to as "output pattern") of the detection portion to be detected of the shift-and-select shaft 45 that is moved in accordance with the shift lever 40 which is operated by the driver. Hence, the output pattern of the shift-and-select shaft 45 is substantially the same as the operation range (shift gate pattern) of the shift lever 40.

In particular, regarding the output of a signal from the shift position sensor 41, an output signal, in the shift direction, increases from the second/fourth/sixth gear stages toward the reverse (REV)/first/third/fifth gear stages. An output signal, in the select direction, increases from the reverse gear stage toward the fifth/sixth gear stages. That is, for example, in the shift direction, an output signal increases when the current gear stage is switched from the second gear stage to the first gear stage (to the contrary, decreases when the current gear stage is switched from the first gear stage to the second gear stage). In addition, in the select direction, an output signal increases when the current gear stage is switched from the reverse gear stage to the first gear stage (to the contrary, decreases when the current gear stage is switched from the first gear stage to the reverse gear stage).

When the shift lever 40 is operated in the select direction and the shift direction, the shift-and-select shaft 45 moves in each of the shift direction (rotational direction) and the select direction (axial direction), causing the finger portion of the shift-and-select shaft 45 to move the shift yoke. When the distal end position of the finger portion (a portion of the finger portion at which the finger portion engages with the shift yoke) reaches a position corresponding to any one of the first gear stage, the second gear stage, the third gear stage, the fourth gear stage, the fifth gear stage, the sixth gear stage, and the reverse gear stage, the one gear stage is established as the current gear stage of the manual transmission 4.

The shift position sensor 41 detects the position of the detection portion to be detected of the shift-and-select shaft 45 in the shift direction (rotational direction) and the select direction (axial direction). In other words, the shift position sensor 41 detects a position in Figure 2 where the detection portion to be detected of the shift-and-select shaft 45 is present.

An output from the shift position sensor 41 when each gear stage (the first gear stage, the second gear stage, the third gear stage, the fourth gear stage, the fifth gear stage, the sixth gear stage, or the reverse gear stage) is established is set to fall within a predetermined range which corresponds to said gear stage in Figure 2. When the output from the shift position sensor 41 falls within one of the respective predetermined ranges corresponding to gear stages of the first gear stage, the second gear stage, the third gear stage, the fourth gear stage, the fifth gear stage, the sixth gear stage, and the reverse gear stage, the ECU 10 determines that the corresponding gear stage is established as the current gear stage of the manual transmission 4.

The manual transmission 4 is provided with a neutral switch 42 connected to the ECU 10. The neutral switch 42 detects a state where neither the forward gear stage nor the reverse gear stage is established in the manual transmission 4, i.e., that the manual transmission 4 is in a neutral state. To be more specific, the neutral switch 42 detects that the shift yoke is not moved by the distal end of the finger portion, i.e., that the finger portion can freely move between the shift yoke for first-second gear stage, the shift yoke for third-fourth gear stage, the shift yoke for fifth-sixth gear stage, and the reverse shift yoke (a state where the finger portion can selectively move).

The neutral switch 42 is turned on due to a contact of a neutral lever (not shown) when the manual transmission 4 is in a neutral state, the neutral lever being provided on the shift-and-select shaft 45. To be more specific, when the shift-and-select shaft 45 is not rotated in the shift direction so that the shift-and-select shaft 45 can move in the select direction, the neutral switch 42 is energized to notify the ECU 10 of the neutral state. That is, the neutral switch 42 enables a neutral state of the gear stage to be detected without depending on the shift position sensor 41.

In Figure 2, an output range indicative of this neutral state is located between the second/fourth/sixth gear stages and the reverse/first/third/fifth gear stages in the shift direction, so as to extend in the select direction. In other words, in the neutral state, an output value from the shift position sensor 41 becomes a value between an output value for the second/fourth/sixth gear stages and an output value for the reverse/first/third/fifth gear stages in the shift direction. In Figure 2, the output range for the neutral state is indicated by a neutral band N.

Each of the shift position sensor 41 and the neutral switch 42 is independent. The neutral switch 42 is turned on when an output value from the shift position sensor 41 mostly falls within the region of the neutral band N. The neutral switch 42 is turned off when the output value mostly falls outside the region of the neutral band N.

The manual transmission 4 is provided with a reverse switch 43 connected to the ECU 10. The reverse switch 43 detects that the reverse gear stage is established as the current gear stage of the manual transmission 4.

The reverse switch 43 is turned on due to a contact of a reverse lever (not shown) when the manual transmission 4 is in the reverse gear stage, the reverse lever being provided on the shift-and-select shaft 45. When the reverse gear stage is established as the current gear stage of the manual transmission 4, the reverse switch 43 is energized to notify the ECU 10 of a state where the reverse gear stage is established. As well as the neutral switch 42, also the reverse switch 43 enables establishment of the reverse gear stage to be determined without depending on the shift position sensor 41.

The reverse switch 43 is turned on when an output value from the shift position sensor 41 mostly falls within a region for the reverse gear stage in Figure 2. The reverse switch 43 is turned off when the output value mostly falls outside the region for the reverse gear stage in Figure 2. The shift-and-select shaft 45 in this embodiment constitutes a transmission member.

As shown in Figure 2 for the reference, the region where the reverse switch 43 is turned on is the same as the output range where the shift position sensor 41 indicates the establishment of the reverse gear stage. However, said region and said output range both do not overlap with the neutral band N where the neutral switch 42 is turned on, to thereby be separated therefrom. Therefore, it is possible to improve reliability for determining the establishment of each gear stage, and the occurrence of mismatch can be reduced.

A power transmission path between the engine 2 and the manual transmission 4 is provided with a clutch 7.

A single plate dry friction clutch may be used for the clutch 7, for example. The engine 2 and the manual transmission 4 are connected with each other via the clutch 7.

The clutch 7 is actuated by a clutch actuator 70 to be switched to any one of an engaged state where power is transmitted between the engine 2 and the manual transmission 4, a release state where power is not transmitted therebetween, and a partial clutch engagement state where a torque is transmitted with a rotational difference therebetween. The clutch actuator 70 is connected to the ECU 10 to controlled thereby.

The ECU 10 controls the clutch actuator 70 in response to the depression amount of a clutch pedal 71 operated by the driver to achieve an action equivalent to that in a manual clutch. In other words, the hybrid vehicle 1 in this embodiment includes a clutch-by-wire clutch 7.

The depression amount of the clutch pedal 71 is detected by a clutch pedal sensor 72.

The clutch pedal sensor 72 is connected to the ECU 10 to send a signal corresponding to the depression amount of the clutch pedal 71 to the ECU 10.

The hybrid vehicle 1 includes a clutch pedal pseudo load device 73 that generates, in a pseudo manner, a reaction force at the time of the clutch pedal 71 being depressed. Due to the reaction force generated by the clutch pedal pseudo load device 73, when the driver depresses the clutch pedal 71, the driver can obtain a feeling of depression equivalent to a feeling of depressing a normal clutch not being a clutch-by-wire clutch.

The hybrid vehicle 1 includes an accelerator pedal 90 to be operated by the driver. The depression amount of the accelerator pedal 90 is detected by an accelerator opening sensor 91. The accelerator opening sensor 91 is connected to the ECU 10 to detect the depression amount of the accelerator pedal 90 as an accelerator opening degree, and send a signal corresponding to the accelerator opening degree to the ECU 10.

The hybrid vehicle 1 includes a brake pedal 92 to be operated by the driver. The depression amount of the brake pedal 92 is detected by a brake pedal sensor 93. The brake pedal sensor 93 is connected to the ECU 10 to send a signal corresponding to the depression amount of the brake pedal 92 to the ECU 10.

The ECU 10 is formed of a computer unit including a central processing unit (CPU), a random access memory (RAM), a read only memory (ROM), a flash memory that stores backup data and other data, an input port, and an output port.

The ROM of the computer unit stores a program for causing the computer unit to serve as the ECU 10 together with various constants, various mappings, and the like. In other words, when the CPU executes the program stored in the ROM using the RAM as the work area, the computer unit serves as the ECU 10 in this embodiment.

The ECU 10 switches the control modes of the hybrid vehicle 1. In this embodiment, the hybrid vehicle 1 includes both an EV mode and an HEV mode as the control modes.

The EV mode is one control mode where the clutch 7 is brought into a released state to cause the hybrid vehicle 1 to travel by power from the motor generator 3 without using power of the engine 2. The HEV mode is another control mode where the clutch 7 is brought into an engaged state to cause the hybrid vehicle 1 to travel by power from the engine 2 or by power from both the engine 2 and the motor generator 3.

To be more specific, in the EV mode, output characteristics and a speed range are set according to the gear stage of the manual transmission 4 that is selected by the driver's operation, and the hybrid vehicle 1 is caused to travel by an output (driving force) that corresponds to the depression amount of the accelerator pedal 90 depressed by the driver, the depression amount being detected by the accelerator opening sensor 91.

In the HEV mode, the hybrid vehicle 1 is caused to travel by a driving force generated by the engine 2 using the motor generator 3 as an auxiliary power.

The ECU 10 switches between the EV mode and the HEV mode based on an accelerator opening degree and an engine speed, for example.

When a driver request torque, determined based on an accelerator opening degree, exceeds an HEV shift threshold during the traveling in the EV mode, for example, the ECU 10 restarts the engine 2 to thereby shift the control mode from the EV mode to the HEV mode.

When a driver request torque, determined based on an accelerator opening degree and an engine speed, falls below an EV shift threshold during the traveling in the HEV mode, for example, the ECU 10 stops the engine 2 to thereby shift the control mode from the HEV mode to the EV mode.

The output shaft 9 of the manual transmission 4 rotates in the forward direction when the hybrid vehicle 1 travels in the forward direction. The output shaft 9 of the manual transmission 4 rotates in a direction opposite to the forward direction when the hybrid vehicle 1 travels in the backward direction. The output shaft of the motor generator 3 is connected to the output shaft 9 of the manual transmission 4 and hence, during the traveling in the EV mode or the HEV mode, the rotational direction of the motor generator 3 is switched according to the advancing direction of the hybrid vehicle 1. The motor generator 3 rotates in the normal direction when the hybrid vehicle 1 travels in the forward direction, and the motor generator 3 rotates in the reverse direction when the hybrid vehicle 1 travels in the backward direction.

Based on detection information from the shift position sensor 41, the ECU 10 controls the driving force of the motor generator 3 so as to rotate the motor generator 3 in a rotational direction corresponding to either the forward gear stage or the reverse gear stage. The motor generator 3 may not be connected to the output shaft 9 of the manual transmission 4, but may be connected to the differential device 5 so as to directly output a driving force to the differential device 5 not via the output shaft 9.

In this embodiment, in a case (first condition) where the detection result from the shift position sensor 41 to output a value depending on the current gear stage, by which the position of the shift-and-select shaft 45 is detected, fails to match those from the neutral switch 42 and the reverse switch 43, the ECU 10 determines that the shift position sensor 41 is in an abnormal state (i.e., that there is a defect in the shift position sensor 41).

With such a configuration, it is possible to easily detect the abnormal state of the shift position sensor 41 by making use of an existing neutral switch 42 and an existing reverse switch 43 for the hybrid vehicle 1.

In addition, it is unnecessary to detect the abnormal state of the shift position sensor 41 by using a device dedicated for detecting failure of the shift position sensor 41 and hence, a control device can be manufactured at a low cost.

Further, when the ECU 10 determines that the shift position sensor 41 is in an abnormal state, the ECU 10 prohibits a driving control for the motor generator 3 based on the detection result by the shift position sensor 41. That is, in such a case, the ECU 10 does not drive the motor generator 3 relying on the detection result by the shift position sensor 41.

With such a configuration, it is possible to prevent the motor generator 3 from being erroneously driven with the detection result from the shift position sensor 41 in an abnormal state and hence, it is possible to prevent the occurrence of a situation that is counter to the intention of the driver.

The ECU 10 causes, when the shift position sensor 41 detects that the current gear stage of the manual transmission 4 is the forward gear stage, the motor generator 3 to generate a driving force in the forward direction on a condition (second condition) that the neutral switch 42 fails to detect that the current gear stage of the manual transmission 4 is neutral and the reverse switch 43 fails to detect that the current gear stage of the manual transmission 4 is the reverse gear stage.

In other words, in a case where the neutral switch 42 and the reverse switch 43 is each in an OFF state when the shift position sensor 41 detects that the current gear stage of the manual transmission 4 is the forward gear stage, the ECU 10 causes the motor generator 3 to generate a driving force in a forward direction.

Here, as one example in Figure 3, when the driver operates the shift lever 40 to thereby move the shift-and-select shaft 45 to a position where a reverse gear stage P1 is established, the shift position sensor 41 should output an output value falling within the range of the reverse gear stage P1 unless there is a defect or the like in the shift position sensor 41. However, if the output in the select direction increases due to the abnormal state or position displacement of the shift position sensor 41, in spite of the fact that the actual gear stage is the reverse gear stage, the shift position sensor 41 outputs a value falling within the range of the first gear stage (see P2) and hence, the ECU 10 erroneously determines that the current gear stage is the first gear stage (forward gear stage).

In such a case, if the motor generator 3 is controlled based on the erroneous detection information from the shift position sensor 41, there is a possibility of the motor generator 3 generating a driving force in the forward direction in spite of the intention of the driver to travel in the backward direction (travel in the reverse direction).

However, in such a state, the reverse switch 43 is rendered ON in accordance with the actual gear stage. Then, in this embodiment, the ECU 10 correctly determines, by using the reverse switch 43, that the current gear stage is the reverse gear stage and thereby, does not permit (i.e., prohibits) a forward drive of the motor generator 3 based on the detection result by the shift position sensor 41 (erroneous detection that the current gear stage is the first gear stage). That is, in such a case, the ECU 10 considers the shift position sensor 41 to be in abnormal state, and does not cause the motor generator 3 to generate a driving force in the forward direction relying on said detection result.

With such a configuration, it is possible to prevent the motor generator 3 from being erroneously driven in the normal direction (driven for forward traveling) in a case where the driver intentionally operates the shift lever to cause the hybrid vehicle 1 to travel in the backward direction. Accordingly, it is possible to prevent the occurrence of a situation that is counter to the intention of the driver.

Further, the ECU 10 causes, when the shift position sensor 41 detects the establishment of the reverse gear stage, the motor generator 3 to generate a driving force in the backward direction on a condition (third condition) that the neutral switch 42 fails to detect the neutral state of the gear stage but the reverse switch 43 detects the establishment of the reverse gear stage. That is, in such a case, the ECU 10 considers the shift position sensor 41 to be in normal state, and causes the motor generator 3 to generate a driving force in the backward direction relying on the detection result by the shift position sensor 41 (correct detection that the current gear stage is the reverse gear stage).

In other words, in the case where the neutral switch 42 is in an OFF state and the reverse switch 43 is in an ON state when the shift position sensor 41 detects that the current gear stage of the manual transmission 4 is the reverse gear stage, the ECU 10 causes the motor generator 3 to generate a driving force in the backward direction, that is, drives the motor generator 3 in the reverse direction.

Another example is as follows. As shown in Figure 4, when the driver operates the shift lever to thereby move shift-and-select shaft 45 to a position where the first gear stage (see P3) is established, the shift position sensor 41 should output a value falling within the range of the first gear stage (P3) unless there is a defect in the shift position sensor 41.

However, if the output in the select direction reduces due to the abnormal state or position displacement of the shift position sensor 41, in spite of the fact that the actual gear stage is the first gear stage, the shift position sensor 41 outputs a value falling within the range of the reverse gear stage (see P4) and hence, erroneously determines that the current gear stage is the reverse gear stage (see P4).

In such a case, if the motor generator 3 is controlled based on the erroneous detection information from the shift position sensor 41, there is a possibility of the motor generator 3 being driven in the reverse direction in spite of the intention of the driver to travel in the forward direction.

However, in such a state, the reverse switch 43 is rendered OFF in accordance with the actual gear stage. Then, in this embodiment, the ECU 10 correctively determines, by using the reverse switch 43, that the actual gear stage is not the reverse gear stage and hence, does not permit a reverse driving for the motor generator 3 based on the detection result by the shift position sensor 41. That is, in such a case, the ECU 10 considers the shift position sensor 41 to be in abnormal state, and does not cause the motor generator 3 to generate a driving force in the backward direction (reverse driving force) relying on said detection result.

Thus, it is possible to prevent the motor generator 3 from being erroneously driven in the reverse direction in a case where the driver intentionally operates the shift lever to cause the hybrid vehicle 1 to travel in the forward direction. Accordingly, it is possible to prevent the occurrence of a situation that is counter to the intention of the driver.

The ECU 10 fails to cause the motor generator 3 to generate a driving force for traveling irrespective of the detection state of the reverse switch 43, on a condition (fourth condition) that an output from the shift position sensor 41 indicates non-establishment of the forward gear stage or the reverse gear stage (i.e., the output fails to fall within any one of the ranges of the forward gear stage and the reverse gear stage) and the neutral switch 42 detects a neutral state of the gear stage.

In other words, in a case where the neutral switch 42 is in an ON state when the shift position sensor 41 detects that the gear stage of the manual transmission 4 is in neutral state or indefinite state (a state where neither the forward gear stage nor the reverse gear stage is established), the ECU 10 prohibits the motor generator 3 from being driven irrespective of an ON or OFF state of the reverse switch 43 and maintains a stopped state of the motor generator 3. That is, in this case, it can be considered that the respective detection results by the shift position sensor 41 and the neutral switch 42 are matched and hence, the motor generator 3 is stopped with on the detection result by the shift position sensor 41 (which is considered to indicate neutral state of the gear stage) without using the detection results by the reverse switch 43. Hence, when it can be determined that the driver requests neutral state for the gear stage, the motor generator 3 is rapidly stopped without waiting the detection result by the reverse switch 43, improving safety.

Furthermore, another example is as follows. As shown in Figure 5, due to the abnormal state or position displacement of the shift position sensor 41, in spite of the fact that the actual gear stage is in neutral state (see P5), the shift position sensor 41 outputs a value falling within the range of the third gear stage (see P6) and hence, the ECU 10 erroneously determines that the current gear stage is the third gear stage. In such a case, if the motor generator 3 is controlled based on the erroneous detection information from the shift position sensor 41, there is a possibility of the motor generator 3 being driven in the normal direction.

However, in such a state, the neutral switch 42 is rendered ON. Then, in this embodiment, the ECU 10 does not permit a normal direction driving of the motor generator 3, not relying on the detection result from the shift position sensor 41.

With such a configuration, it is possible to prevent the motor generator 3 from being erroneously driven in a case where the gear stage of the manual transmission 4 is in a neutral state and hence, it is possible to prevent the occurrence of a situation that is counter to the intention of the driver.

As described above, the ECU 10 in this embodiment can easily detect the abnormal state of the shift position sensor 41 at a low cost by making use of the neutral switch 42 and the reverse switch 43, and can prevent the motor generator 3 from being driven relying on the detection result from the shift position sensor 41 in an abnormal state.

In a case where the shift position sensor 41 is in an abnormal state, there is a high possibility of a failure of the shift position sensor 41. Thus, the failure of the shift position sensor 41 may be informed to the driver and a warning may be given to the driver to inspect or replace the shift position sensor 41.

Although the embodiment of the present invention has been disclosed, it is apparent that modifications may be applied by those who are skilled in the art without departing from the scope of the present invention as defined by the appended claims.

### [Reference Signs List]

1: hybrid vehicle
2: engine (internal combustion engine)
3: motor generator (electric motor)
4: manual transmission
6A, 6B: driving wheel
7: clutch
10: ECU (control unit)
41: shift position sensor
42: neutral switch
43: reverse switch
45: shift-and-select shaft (transmission member)

## Claims

1. A control device for a hybrid vehicle (1),
the hybrid vehicle including:
an internal combustion engine (2) and an electric motor (3) each configured to generate a driving force to be transmitted to a driving wheel (6A, 6B);
a manual transmission (4) connected to the internal combustion engine (2) via a clutch (7), and including: a transmission mechanism to establish one of gear stages; and a transmission member (45) to move in a direction of an axis thereof and rotate about the axis in response to an operation of a shift lever (40) to thereby move the transmission mechanism and cause it to establish the one gear stage;
a shift position sensor (41) configured to detect respective positions of the transmission member (45) in the direction of the axis and in a rotational direction about the axis, these positions corresponding to the established gear stage of the manual transmission (4);
a neutral switch (42) configured to detect that the transmission member (45) is not rotated in the rotational direction to thereby detect that the established gear stage is neutral; and
a reverse switch (43) configured to detect that the established gear stage is a reverse gear stage,
a rotational direction of the electric motor (3) being switched according to an advancing direction of the hybrid vehicle (1),
the control device comprising
a control unit (10) configured to perform, for the electric motor (3), a driving control based on the detection result by the shift position sensor (41), wherein
the control unit (10) prohibits said driving control on a first condition that the detection result by the shift position sensor (41) fails to match the detection results by the neutral switch (42) and the reverse switch (43).

2. The control device as claimed in claim 1, wherein
in a case where the shift position sensor (41) detects that the established gear stage is a forward gear stage, the control unit (10) causes the electric motor (3) to generate a driving force in a forward direction, on a second condition that the neutral switch (42) fails to detect that the established gear stage is neutral and the reverse switch (43) fails to detect that the established gear stage is the reverse gear stage.

3. The control device as claimed in claim 1 or 2, wherein
in a case where the shift position sensor (41) detects that the established gear stage is the reverse gear stage, the control unit (10) causes the electric motor (3) to generate a driving force in a backward direction, on a third condition that the neutral switch (42) fails to detect that the established gear stage is neutral but the reverse switch (43) detects that the established gear stage is the reverse gear stage.

4. The control device as claimed in any one of claims 1 to 3, wherein
the control unit (10) fails to cause the electric motor (3) to generate a driving force for traveling irrespective of the detection result by the reverse switch (43), on a fourth condition that the shift position sensor (41) detects that neither a forward gear stage nor the reverse gear stage is established, and the neutral switch (42) detects that the established gear stage is neutral.

## Patentansprüche

1. Eine Steuervorrichtung für ein Hybridfahrzeug (1),
wobei das Hybridfahrzeug Folgendes umfasst:
einen Verbrennungsmotor (2) und einen Elektromotor (3), die jeweils konfiguriert sind, um eine Antriebskraft zu erzeugen, die auf ein Antriebsrad (6A, 6B) übertragen werden soll;
ein Schaltgetriebe (4), das über eine Kupplung (7) mit dem Verbrennungsmotor (2) verbunden ist und Folgendes umfasst: einen Getriebemechanismus zum Herstellen einer von Gangstufen; und ein Getriebeelement (45), das sich in Richtung einer Achse davon bewegt und sich um die Achse dreht, als Reaktion auf eine Betätigung eines Schalthebels (40), um dadurch den Getriebemechanismus zu bewegen und zu veranlassen, die eine Gangstufe herzustellen;
einen Schaltpositionssensor (41), der konfiguriert ist, um jeweilige Positionen des Getriebeelements (45) in der Richtung der Achse und in einer Drehrichtung um die Achse zu erfassen, wobei diese Positionen mit der hergestellten Gangstufe des Schaltgetriebes (4) korrespondieren;
einen Neutralschalter (42), der konfiguriert ist, um zu erfassen, dass das Getriebeelement (45) in der Drehrichtung nicht gedreht wird, um dadurch zu erfassen, dass die hergestellte Gangstufe neutral ist; und
einen Rückwärtsschalter (43), der konfiguriert ist, um zu erfassen, dass die hergestellte Gangstufe eine Rückwärtsgangstufe ist,
wobei eine Drehrichtung des Elektromotors (3) gemäß einer Vorwärtsrichtung des Hybridfahrzeugs (1) geschaltet wird,
wobei die Steuervorrichtung eine Steuereinheit (10) aufweist, die konfiguriert ist, um für den Elektromotor (3) eine Antriebssteuerung basierend auf dem Erfassungsergebnis durch den Schaltpositionssensor (41) durchzuführen, wobei
die Steuereinheit (10) die Antriebssteuerung unter einer ersten Bedingung verhindert, dass das Erfassungsergebnis des Schaltpositionssensors (41) nicht mit den Erfassungsergebnissen des Neutralschalters (42) und des Rückwärtsschalters (43) übereinstimmt.

2. Die Steuervorrichtung nach Anspruch 1, wobei
in einem Fall, in dem der Schaltpositionssensor (41) erfasst, dass die hergestellte Gangstufe eine Vorwärtsgangstufe ist, die Steuereinheit (10) den Elektromotor (3) veranlasst, eine Antriebskraft in einer Vorwärtsrichtung zu erzeugen, unter einer zweiten Bedingung, dass der Neutralschalter (42) nicht erfasst, dass die hergestellte Gangstufe neutral ist, und der Rückwärtsschalter (43) nicht erfasst, dass die hergestellte Gangstufe die Rückwärtsgangstufe ist.

3. Die Steuervorrichtung nach Anspruch 1 oder 2, wobei
in einem Fall, in dem der Schaltpositionssensor (41) erfasst, dass die hergestellte Gangstufe die Rückwärtsgangstufe ist, die Steuereinheit (10) den Elektromotor (3) veranlasst, eine Antriebskraft in einer Rückwärtsrichtung zu erzeugen, unter einer dritten Bedingung, dass der Neutralschalter (42) nicht erfasst, dass die hergestellte Gangstufe neutral ist, aber der Rückwärtsschalter (43) erfasst, dass die hergestellte Gangstufe die Rückwärtsgangstufe ist.

4. Die Steuervorrichtung nach einem der Ansprüche 1 bis 3, wobei
die Steuereinheit (10) den Elektromotor (3) nicht dazu veranlasst, eine Antriebskraft zum Fahren zu erzeugen, unabhängig von dem Erfassungsergebnis des Rückwärtsschalters (43), unter einer vierten Bedingung, dass der Schaltpositionssensor (41) erfasst, dass weder eine Vorwärtsgangstufe noch die Rückwärtsgangstufe hergestellt ist, und der Neutralschalter (42) erfasst, dass die hergestellte Gangstufe neutral ist.

## Revendications

1. Un dispositif de commande pour un véhicule hybride (1),
le véhicule hybride comprenant :
un moteur à combustion interne (2) et un moteur électrique (3), chacun étant configuré pour générer une force motrice à transmettre à une roue motrice (6A, 6B);
une transmission manuelle (4) reliée au moteur à combustion interne (2) par un embrayage (7) et comprenant : un mécanisme de transmission pour établir un des rapports de vitesse ; et un élément de transmission (45) qui se déplace dans la direction d'un axe de celui-ci et tourne autour de l'axe en réponse à l'actionnement d'un levier de changement de vitesse (40) pour ainsi déplacer le mécanisme de transmission et l'amener à établir un des rapports de vitesse ;
un capteur de position de changement de vitesse (41) configuré pour détecter les positions respectives de l'élément de transmission (45) dans la direction de l'axe et dans une direction de rotation autour de l'axe, ces positions correspondant au rapport de vitesse établi de la boîte de vitesses (4) ;
un commutateur de point mort (42) configuré pour détecter que l'élément de transmission (45) n'est pas tourné dans le sens de rotation, pour détecter ainsi que le rapport établi est le point mort ; et
un commutateur de marche arrière (43) configuré pour détecter que le rapport établi est un rapport de marche arrière,
le sens de rotation du moteur électrique (3) étant commuté en fonction du sens de marche avant du véhicule hybride (1),
le dispositif de commande comprenant une unité de commande (10) configurée pour effectuer une commande d'entraînement du moteur électrique (3) sur la base du résultat de détection par le capteur de position de commutation (41),
l'unité de commande (10) empêche la commande d'entraînement dans une première condition où le résultat de détection du capteur de position de commutation (41) ne coïncide pas avec les résultats de détection du commutateur de point mort (42) et du commutateur de marche arrière (43).

2. Dispositif de commande selon la revendication 1, dans lequel
dans le cas où le capteur de position de changement de vitesse (41) détecte que le rapport de vitesse engagé est un rapport de marche avant, l'unité de commande (10) fait en sorte que le moteur électrique (3) génère une force motrice dans le sens de la marche avant, à une deuxième condition que le commutateur de point mort (42) ne détecte pas que le rapport de vitesse engagé est le point mort et que le commutateur de marche arrière (43) ne détecte pas que le rapport engagé est le rapport de marche arrière.

3. Le dispositif de commande selon la revendication 1 ou 2, dans lequel
dans un cas où le capteur de position de changement de vitesse (41) détecte que le rapport de vitesse engagé est le rapport de marche arrière, l'unité de commande (10) fait en sorte que le moteur électrique (3) produise une force motrice dans le sens de la marche arrière, sous une troisième condition que le contacteur de point mort (42) ne détecte pas que le rapport de vitesse engagé est le point mort, mais que le commutateur de marche arrière (43) détecte que le rapport engagé est le rapport de marche arrière.

4. Le dispositif de commande selon l'une des revendications 1 à 3, dans lequel
l'unité de commande (10) ne fait pas en sorte que le moteur électrique (3) produise une force d'entraînement pour la conduite, indépendamment du résultat de détection du commutateur de marche arrière (43), sous une quatrième condition que le capteur de position de commutation (41) détecte qu'aucun rapport de marche avant ni de marche arrière n'est engagé et que le commutateur de point mort (42) détecte que le rapport engagé est le point mort.
